# EUROPEAN PATENT SPECIFICATION

(11) **EP 2 114 662 B1**
(45) Date of publication and mention of the grant of the patent: **15.12.2010**
(21) Application number: 07706235.4
(22) Date of filing: 17.01.2007
(51) Int. Cl.: B29D 30/24, B29D 30/26, B60C 17/08

(54) **RUN-FLAT TYRE EXPANDABLE BAND DRUM**
AUFWEITBARE BANDTROMMEL FÜR RUNFLAT-REIFEN
TAMBOUR DE BANDE EXTENSIBLE DE PNEU À AFFAISSEMENT LIMITÉ

(43) Date of publication of application: 11.11.2009
(73) Proprietor: Bridgestone Corporation, Tokyo 104-8430 (JP)
(72) Inventor: FABRIZIO, Marco, 03040 Picinisco (IT)
(74) Representative: Maccagnan, Matteo
(86) International application number: PCT/IT2007/000036
(87) International publication number: WO 2008/087671

(56) References cited:
- EP-A1- 1 512 524
- EP-A2- 0 634 266
- DE-A1- 2 551 285
- US-A- 4 292 112

## Description

### TECHNICAL FIELD

The present invention relates to a band drum for a run-flat tyre (i.e. a tyre that can be used even when flat at slow speed and over limited distances) having two reinforming inserts according to the preamble of claim 1.

A band drum of this kind is known from e.g. EP-A- 0 634 266 or US-A- 6 488 797.

### BACKGROUND ART

An expandable tyre building drum comprises a cylindrical outer shell in turn comprising a number of coaxial, side by side rings. Each ring of the building drum comprises a number of sectors arranged successively in a circle and mounted on an inner actuator which moves the sectors radially to vary the outside diameter of the ring.

In actual use, an innerliner and a body ply are wound about the building drum, which is then expanded to tension the innerliner and body ply so that the innerliner adheres to the body ply.

A run-flat tyre differs from a normal tyre by comprising two annular reinforcing inserts inside the sidewalls of the tyre. Two intermediate rings of a run-flat tyre expandable band drum therefore have respective annular seats formed by appropriately shaping the corresponding sectors and for housing the annular reinforcing inserts in the desired position. One example of a run-flat tyre expandable band drum is described in US6488797B1, EP1512524A1, and EP0634266A2.

The thickness, width, and position of each reinforcing insert vary depending on the size and characteristics of the run-flat tyre being produced. And, whereas the same intermediate ring can house reinforcing inserts of different thicknesses, even the slightest variation (as little as 1 mm) in the width or position of the reinforcing insert calls for changing the intermediate ring for one with an annular seat of the right size. For each expandable band drum, a large number of intermediate rings must therefore be produced, each comprising a number of sectors and designed to produce a given type of run-flat tyre. Producing a pair of intermediate rings, however, is an expensive, fairly time-consuming job. Moreover, working with a large number of only slightly different intermediate rings (the difference at times not even being discernable to the naked eye) poses storage problems and increases the risk of mounting the wrong pair of intermediate rings.

US4292112A1 and DE2551285A discloses a tire building drum of the type involved in the present invention.

### DISCLOSURE OF THE INVENTION

It is an object of the present invention to provide a run-flat tyre expandable band drum designed to eliminate the aforementioned drawbacks and which, in particular, is cheap and easy to produce.

According to the present invention, the above object is achieved by a band drum as defined in claim 1.

Particular embodiments of the invention are the subject of the dependent claims.

### BRIEF DESCRIPTION OF THE DRAWINGS

A non-limiting embodiment of the present invention will be described by way of example with reference to the accompanying drawings, in which:
Figure 1 shows schematically, with parts removed for clarity, a plan view of a run-flat tyre expandable band drum in accordance with the present invention;
Figure 2 shows a larger-scale view in perspective of a sector of an intermediate ring of the Figure 1 band drum;
Figure 3 shows schematic side views of four different configurations of the Figure 2 sector;
Figure 4 shows a schematic lateral section of part of a run-flat tyre produced on the Figure 1 band drum.

### PREFERRED EMBODIMENTS OF THE INVENTION

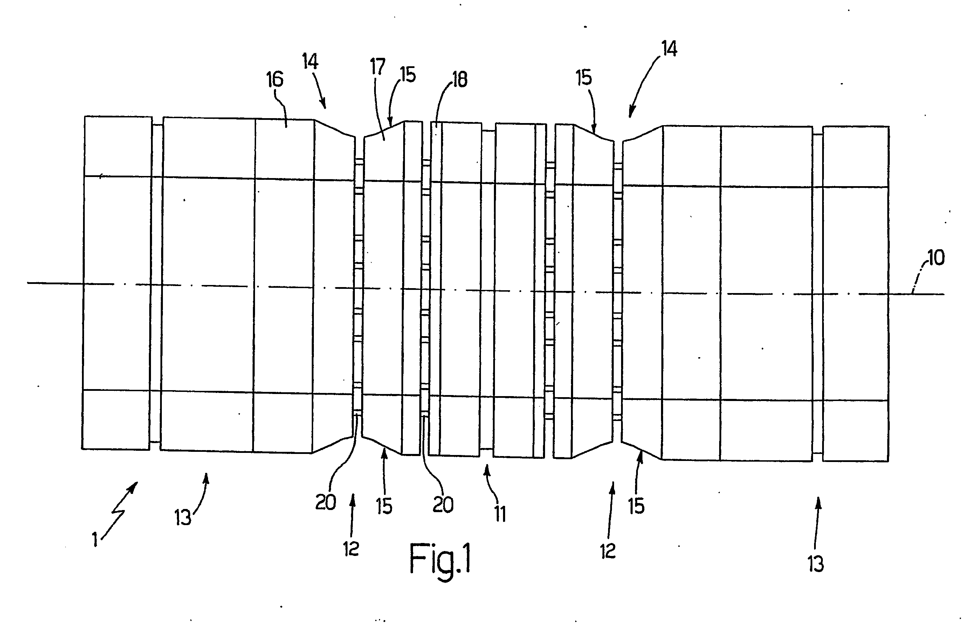

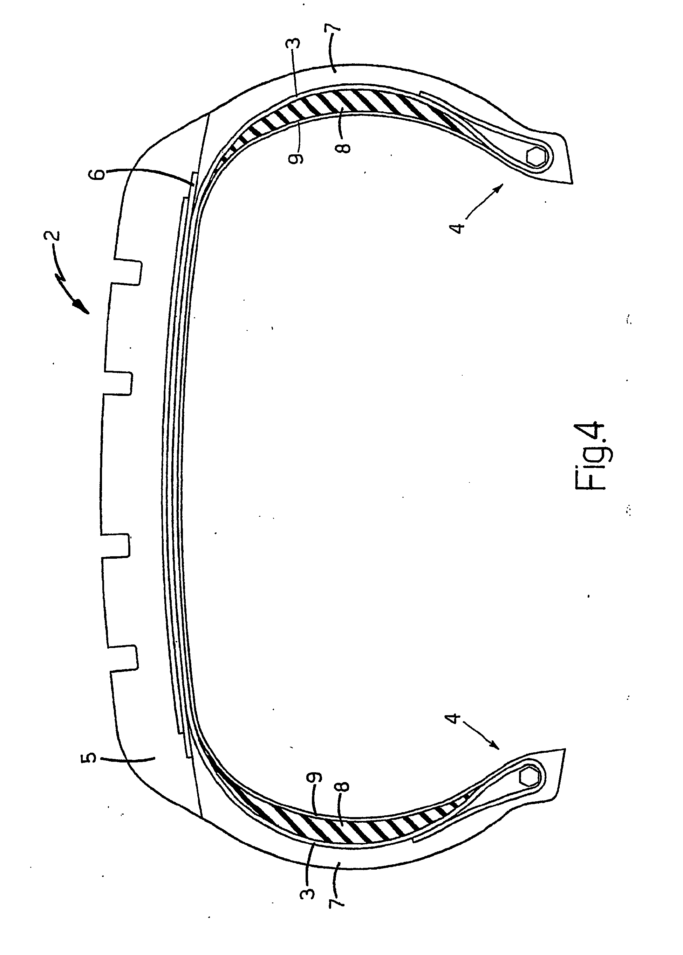

Number 1 in Figure 1 indicates as a whole an expandable band drum for a run-flat tyre 2 (shown in Figure 4).

As shown in Figure 4, tyre 2 comprises a toroidal body ply 3 having two annular beads 4 and supporting an annular tread 5. A tread belt 6 comprising a number of tread plies is interposed between body ply 3 and tread 5. Body ply 3 supports two sidewalls 7 between tread 5 and beads 4; each sidewall 7 has a reinforcing insert 8 for increasing crush resistance and so enabling use of tyre 2 even when flat (at slow speed and over limited distances); and, inside, tyre 2 has a toroidal innerliner 9 impermeable to air.

In Figure 4, each reinforcing insert 8 is located inwards of body ply 3. In a different embodiment not shown, each reinforcing insert is located outwards of body ply 3 and therefore directly contacts beads 4.

As shown in Figure 1, band drum 1 has an axis of rotation 10, and comprises a central ring 11, two intermediate rings 12, and two outer rings 13. Each ring 11, 12, 13 comprises a number of sectors 14 arranged successively in a circle and mounted on an inner actuator (not shown) which moves sectors 14 radially to vary the outside diameter of ring 11, 12, 13; and each intermediate ring 12 has an annular seat 15 for housing a reinforcing insert 8 of tyre 2.

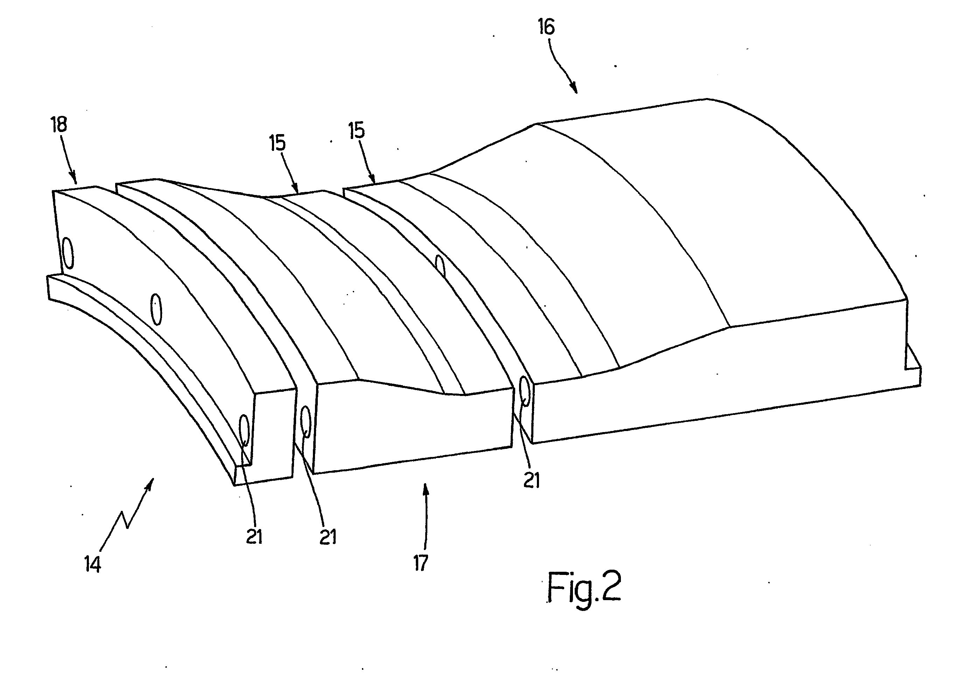

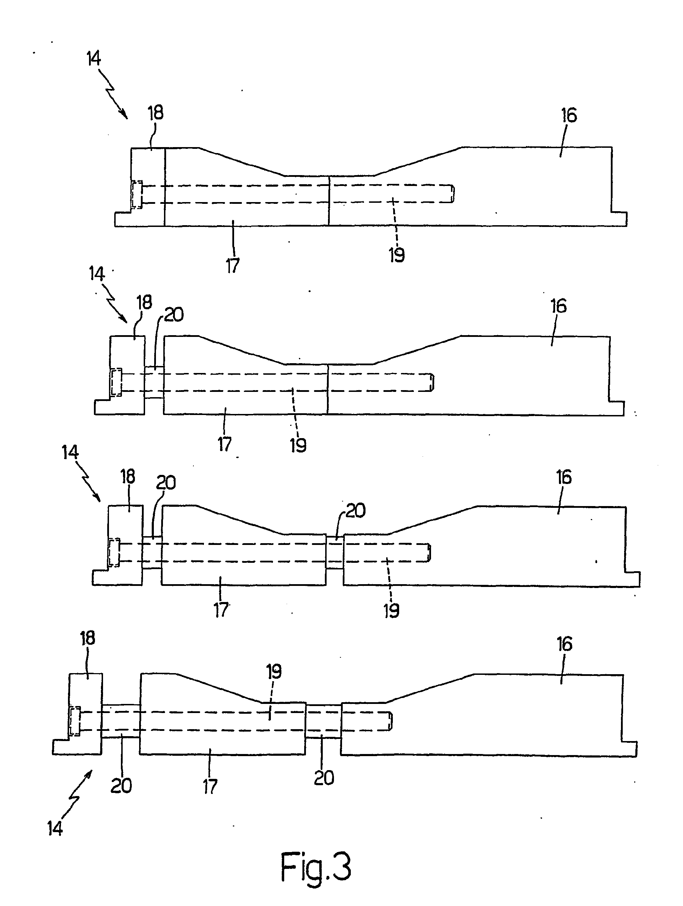

As shown in Figures 2 and 3, each sector 14 of intermediate rings 12 is defined by three members 16, 17, 18 - in particular, a lateral member 16 contacting an outer ring 13; a central member 17; and a lateral member 18 contacting central ring 11 - so that each central member 17 is located between two lateral members 16 and 18. Members 16, 17, 18 of each sector 14 of intermediate rings 12 are separate and independent, and are connected to one another by a number of (normally three or four) assembly screws 19 extending parallel to axis of rotation 10.

Annular seat 15 of each sector 14 of intermediate rings 12 is preferably formed in central member 17 and lateral member 16, whereas lateral member 18 has a flat cylindrical outer surface. Moreover, lateral member 16 is longer, measured parallel to axis of rotation 10, than central member 17, which in turn is longer, measured parallel to axis of rotation 10, than lateral member 18.

As shown in Figure 3, spacers 20 of calibrated thickness may be inserted between members 16, 17, 18 of each sector 14 of intermediate rings 12 to keep members 16, 17, 18 a desired distance apart.

Preferably, each spacer 20 is made of plastic, is in the form of a cylindrical tube, and is fitted through with a respective assembly screw 19. In other words, each spacer 20 is a small tube of plastic cut to size from a single tube, so that even a large number of spacers 20 of different sizes can be formed cheaply and easily.

More specifically, for each sector 14 of intermediate rings 12, spacers 20 of calibrated thickness can be inserted between lateral member 16 and central member 17 to adjust the size of annular seat 15 and so adapt annular seat 15 to the actual size of reinforcing insert 8; and, for each sector 14 of intermediate rings 12, spacers 20 of calibrated thickness can be inserted between lateral member 18 and central member 17 to adjust the axial position of annular seat 15 and so adapt the axial position of annular seat 15 to the desired position of reinforcing insert 8.

For each sector 14 of intermediate rings 12, central member 17 and lateral member 18 have a number of through holes 21, each for receiving an assembly screw 19; and lateral member 16 has a number of dead threaded holes 21, each for receiving an assembly screw 19. In other words, each assembly screw 19 is inserted through the through hole 21 in lateral member 18 and through the through hole 21 in central member 17, and is screwed into the dead threaded hole 21 in lateral member 16 to tighten members 16, 17, 18 together.

In the embodiment shown in the accompanying drawings, each sector 14 of intermediate rings 12 comprises three members 16, 17, 18; in alternative embodiments not shown, each sector 14 of intermediate rings 12 may comprise a different number of (e.g. two or four) members. Obviously, the greater the number of members each sector 14 of intermediate rings 12 comprises, the more complicated it is mechanically, and the greater the extent to which it can be adjusted. Theoretical analysis and testing, however, have shown the best compromise is achieved using three members 16, 17, 18 as described above for each sector 14 of intermediate rings 12.

Band drum 1 as described above has numerous advantages : it is mechanically straightforward, is cheap to produce, and provides for adapting the size and position of each annular seat 15 quickly, and with substantially no additional cost, using appropriate spacers 20 (defined by small plastic tubes cut to size).

## Claims

1. A band drum (1) for a run-flat tyre (2) having two reinforcing inserts (8);
the band drum (1) has an axis (10) of rotation, and comprises two intermediate rings (12), each of which comprises a number of sectors (14) arranged successively in a circle, and has an annular seat (15) for housing a reinforcing insert (8) of the tyre (2);
the band drum (1) is **characterized in that** each sector (14) of the intermediate rings (12) comprises at least two members (16, 17, 18), which are separate, independent, and connected to each other by a number of assembly screws (19) extending parallel to the axis (10) of rotation.

2. A band drum (1) as claimed in Claim 1, wherein spacers (20) of calibrated thickness can be inserted between the members (16, 17, 18) of each sector (14) of the intermediate rings (12) to keep the members (16, 17, 18) a desired distance apart.

3. A band drum (1) as claimed in Claim 2, wherein each spacer (20) is in the form of a cylindrical tube, and is fitted through with a respective assembly screw (19).

4. A band drum (1) as claimed in Claim 1, 2 or 3, wherein each sector (14) of the intermediate rings (12) comprises three members (16, 17, 18) : a first lateral member (16), a central member (17), and a second lateral member (18).

5. A band drum (1) as claimed in Claim 4, wherein the first lateral member (16) is located facing a base wall of the band drum (1), and the second lateral member (18) is located facing the centre of the band drum (1).

6. A band drum (1) as claimed in Claim 4 or 5, wherein the annular seat (15) of each sector (14) of the intermediate rings (12) is formed in the central member (17) and in the first lateral member (16).

7. A band drum (1) as claimed in Claim 6, wherein, for each sector (14) of the intermediate rings (12), spacers (20) of calibrated thickness can be inserted between the first lateral member (16) and the central member (17) to adjust the size of the annular seat (15) and so adapt the annular seat (15) to the actual size of the reinforcing insert (8).

8. A band drum (1) as claimed in Claim 6 or 7, wherein, for each sector (14) of the intermediate rings (12), spacers (20) of calibrated thickness can be inserted between the second lateral member (18) and the central member (17) to adjust the axial position of the annular seat (15) and so adapt the axial position of the annular seat (15) to the desired position of the reinforcing insert (8).

9. A band drum (1) as claimed in one of Claims 4 to 8, wherein the central member (17) and the second lateral member (18) have a number of through holes (21), each for receiving an assembly screw (19); and the first lateral member (16) has a number of dead threaded holes (21), each for receiving an assembly screw (19).

10. A band drum (1) as claimed in one of Claims 4 to 9, wherein the first lateral member (16), measured parallel to the axis (10) of rotation, is longer than the central member (17) and the second lateral member (18).

11. A band drum (1) as claimed in Claim 10, wherein the central member (17), measured parallel to the axis (10) of rotation, is longer than the second lateral member (18).

12. A band drum (1) as claimed in one of Claims 1 to 11, wherein each sector (14) of the intermediate rings (12) has at least three assembly screws (19).

13. A band drum (1) as claimed in one of Claims 1 to 11, wherein each sector (14) of the intermediate rings (12) has four assembly screws (19).

## Patentansprüche

1. Eine Bandtrommel (1) für einen Run-Flat-Reifen (2) mit zwei verstärkenden Einlagen (8);
die Bandtrommel (1) weist eine Rotationsachse (10) auf, und umfasst zwei Zwischenringe (12), von denen jeder eine Anzahl von Sektoren (14) umfasst, die aufeinanderfolgend in einem Kreis angeordnet sind, und weist einen ringförmigen Sitz (15) zum Aufnehmen einer verstärkenden Einlage (8) des Reifens (2) auf; die Bandtrommel (1) ist **dadurch gekennzeichnet, dass** jeder Sektor (14) der Zwischenringe (12) zumindest zwei Bauteile (16, 17, 18) umfasst, welche getrennt, unabhängig und miteinander verbunden sind durch eine Anzahl von Verbindungsschrauben (19), die sich parallel zu der Rotationsachse (10) erstrecken.

2. Bandtrommel (1) nach Anspruch 1, bei welcher Abstandshalter (20) mit einer kalibrierten Dicke zwischen die Bauteile (16, 17, 18) jedes Sektors (14) der Zwischenringe (12) eingefügt werden können, um die Bauteile (16, 17, 18) mit einem gewünschten Abstand auseinanderzuhalten.

3. Bandtrommel (1) nach Anspruch 2, bei welcher jeder Abstandshalter (20) in der Form einer zylindrischen Röhre vorliegt, und durch eine entsprechende Verbindungsschraube (19) durchzogen ist.

4. Bandtrommel (1) nach irgendeinem der Ansprüche 1, 2 oder 3, bei welcher jeder Sektor (14) der Zwischenringe (12) drei Bauteile (16, 17, 18) umfasst: ein erstes laterales Bauteil (16), ein Zentralbauteil (17) und ein zweites laterales Bauteil (18).

5. Bandtrommel (1) nach Anspruch 4, bei welcher das erste laterale Bauteil (16) einer Grundwand der Bandtrommel (1) zugewandt angeordnet ist und das zweite laterale Bauteil (18) dem Zentrum der Bandtrommel (1) zugewandt angeordnet ist.

6. Bandtrommel (1) nach Anspruch 4 oder 5, bei welcher der ringförmige Sitz (15) jedes Sektors (14) der Zwischenringe (12) in dem Zentralbauteil (17) und in dem ersten lateralen Bauteil (16) gebildet ist.

7. Bandtrommel (1) nach Anspruch 6, bei welcher für jeden Sektor (14) der Zwischenringe (12) Abstandshalter (20) einer kalibrierten Dicke zwischen dem ersten lateralen Bauteil (16) und dem Zentralbauteil (17) eingefügt werden können, um die Größe des ringförmigen Sitzes (15) einzustellen, und um so den ringförmigen Sitz (15) an die tatsächliche Größe der verstärkenden Einlage (8) anzupassen.

8. Bandtrommel (1) nach Anspruch 6 oder 7, bei welcher für jeden Sektor (14) der Zwischenringe (12) Abstandshalter (20) mit einer kalibrierten Dicke zwischen dem zweiten lateralen Bauteil (18) und dem Zentralbauteil (17) eingefügt werden können, um die axiale Position des ringförmigen Sitzes (15) einzustellen, und um so die axiale Position des ringförmigen Sitzes (15) an die gewünschte Position der verstärkenden Einlage (8) anzupassen.

9. Bandtrommel (1) nach irgendeinem der Ansprüche 4 bis 8, bei welcher das Zentralbauteil (17) und das zweite laterale Bauteil (18) eine Anzahl von Durchgangslöchern (21) aufweisen, um jeweils eine Verbindungsschraube (19) aufzunehmen, und wobei das erste laterale Bauteil (16) eine Anzahl von Sackgewindelöchern (21) aufweist, um jeweils eine Verbindungsschraube (19) aufzunehmen.

10. Bandtrommel (1) nach irgendeinem der Ansprüche 4 bis 9, bei welcher das erste laterale Bauteil (16) bei einer Messung parallel zu der Rotationsachse (10) länger als das Zentralbauteil (17) und das zweite laterale Bauteil (18) ist.

11. Bandtrommel (1) nach Anspruch 10, bei welcher das Zentralbauteil (17) bei einer Messung parallel zu der Rotationsachse (10) länger als das zweite laterale Bauteil (18) ist.

12. Bandtrommel (1) nach irgendeinem der Ansprüche 1 bis 11, bei welcher jeder Sektor (14) der Zwischenringe (12) zumindest drei Verbindungsschrauben (19) aufweist.

13. Bandtrommel (1) nach irgendeinem der Ansprüche 1 bis 11, bei welcher jeder Sektor (14) der Zwischenringe (12) vier Verbindungsschrauben (19) aufweist.

## Revendications

1. Tambour de bande (1) pour la confection d'un pneu à (2) à flancs porteurs ayant deux pièces rapportées de renforcement (8) ;
le tambour de bande (1) a un axe (10) de rotation, et comprend deux anneaux intermédiaires (12), dont chacun comprend un nombre de secteurs (14) agencés successivement en cercle, et a un siège annulaire (15) pour recevoir une pièce rapportée de renforcement (8) du pneu (2) ;
le tambour de bande (1) est **caractérisé en ce que** chaque secteur (14) des anneaux intermédiaires (12) comprend au moins deux organes (16, 17, 18), qui sont séparés, indépendants, et reliés entre eux par un nombre de vis d'assemblage (19) s'étendant parallèlement à l'axe (10) de rotation.

2. Tambour de bande (1) tel que revendiqué dans la revendication 1, dans lequel des entretoises (20) à épaisseurs calibrées peuvent être insérées entre les organes (16, 17, 18) de chaque secteur (14) des anneaux intermédiaires (12) pour maintenir les organes (16, 17, 18) éloignés à une distance désirée.

3. Tambour de bande (1) tel que revendiqué dans la revendication 2, dans lequel chaque entretoise (20) est en forme de tube cylindrique, à travers lequel elle est ajustée avec une vis d'assemblage (19) respective.

4. Tambour de bande (1) tel que revendiqué dans la revendication 1, 2 ou 3, dans lequel chaque secteur (14) des anneaux intermédiaires (12) comprend trois organes (16, 17, 18) : un premier organe latéral (16), un organe central (17), et un deuxième organe latéral (18).

5. Tambour de bande (1) tel que revendiqué dans la revendication 4, dans lequel le premier organe latéral (16) est situé en vis-à-vis d'une paroi de base du tambour de bande (1), et le deuxième organe latéral (18) est situé en face du centre du tambour de bande (1).

6. Tambour de bande (1) tel que revendiqué dans la revendication 4 ou 5, dans lequel le siège annulaire (15) de chaque secteur (14) des anneaux intermédiaires (12) est formé dans l'organe central (17) et dans le premier organe latéral (16).

7. Tambour de bande (1) tel que revendiqué dans la revendication 6, dans lequel, pour chaque secteur (14) des anneaux intermédiaires (12), des entretoises (20) à épaisseurs calibrées peuvent être insérées entre le premier organe latéral (16) et l'organe central (17) afin de régler la taille du siège annulaire (15) et ainsi adapter le siège annulaire (15) à la taille effective de la pièce rapportée de renforcement (8).

8. Tambour de bande (1) tel que revendiqué dans la revendication 6 ou 7, dans lequel, pour chaque secteur (14) des anneaux intermédiaires (12), des entretoises (20) à épaisseurs calibrées peuvent être insérées entre le deuxième organe latéral (18) et l'organe central (17) afin de régler la position axiale du siège annulaire (15) et ainsi d'adapter la position axiale du siège annulaire (15) à la position désirée de la pièce rapportée de renforcement (8).

9. Tambour de bande (1) tel que revendiqué dans l'une des revendications 4 à 8, dans lequel l'organe central (17) et le deuxième organe latéral (18) ont un nombre de trous traversant (21), chacun destiné à recevoir une vis d'assemblage (19) ; et le premier organe latéral (16) a un nombre de trous borgnes taraudés (21), chacun destiné à recevoir une vis d'assemblage (19).

10. Tambour de bande (1) tel que revendiqué dans l'une des revendications 4 à 9, dans lequel le premier organe latéral (16), mesuré parallèlement à l'axe (10) de rotation, est plus long que l'organe central (17) et le deuxième organe latéral (18).

11. Tambour de bande (1) tel que revendiqué dans la revendication 10, dans lequel l'organe central (17), mesuré parallèlement à l'axe (10) de rotation, est plus long que le deuxième organe latéral (18).

12. Tambour de bande (1) tel que revendiqué dans l'une des revendications 1 à 11, dans lequel chaque secteur (14) des anneaux intermédiaires (12) a au moins trois vis d'assemblage (19).

13. Tambour de bande (1) tel que revendiqué dans l'une des revendications 1 à 11, dans lequel chaque secteur (14) des anneaux intermédiaires (12) a quatre vis d'assemblage (19).
